# EUROPEAN PATENT APPLICATION

(11) **EP 4 764 211 A1**
(43) Date of publication of application: **24.06.2026**
(21) Application number: 25159798.5
(22) Date of filing: 25.02.2025
(51) Int. Cl.: F03D 17/00, F03D 80/00, F03D 80/50

(54) **AN INTERLOCKING SYSTEM FOR A HUB GATE AND A ROTOR LOCK DISC IN A WIND TURBINE GENERATOR**

(30) Priority: 19.12.2024 IN 202411100921
(71) Applicant: RE Technologies GmbH, 22083 Hamburg (DE)
(72) Inventor: NARAYAN, DINESH, 560066 Bengaluru (IN)
(74) Representative: Buzzi, Notaro & Antonielli d'Oulx S.p.A.

(57) **Abstract**

The present invention provides an interlocking system for a hub gate and a rotor lock disc in a wind turbine generator. This includes rotor lock disc 100 with hole, the rotor lock disc 100 is configured to be locked for preventing a rotation thereof by inserting a locking pin 120 in the hole of the rotor lock disc 100. Further, a hub gate 180 provided on a nacelle for providing access to a rotor hub, the hub gate 180 configured to be locked or unlocked by a locking means; and an interlocking means configured to activate the locking means for locking or unlocking of the hub gate 180 when the rotor lock disc 100 is unlocked or locked respectively.

## Description

### Field of Invention:

The present invention relates to an interlocking system for a hub gate and a rotor lock disc in a wind turbine generator.

### Background of the Invention

The following background discussion includes information that may be useful in understanding the present invention. It is not an admission that any of the information provided herein is prior art or relevant to the presently claimed invention, or that any publication expressly or implicitly referenced is prior art.

Wind turbines are well known to generate power by utilizing wind power. The power generating part of the wind turbines are mounted on the upper part of the wind turbine within a nacelle. In a usual arrangement, the nacelle is mounted on a tower, with a rotor and blades being mounted on the nacelle. The rotor is mounted on a rotor shaft which is supported in the nacelle by a shaft housing.

In certain situations, the rotor must be stopped, maintained in position, or locked to prevent any rotary movement, for example so that maintenance work can be carried out on the rotor or nacelle. It is therefore necessary to allow maintenance personnel to gain access to these parts in order to allow them to perform the required maintenance, repair or replacement. This will sometimes include gaining access to an interior part of the hub. For safety reasons the rotor must be prevented from performing rotational movements during such maintenance operations.

Further, to make safer for maintenance personnel to carry out the maintenance work in the rotating part of the wind turbine a hub gate can be mounted on the nacelle to gives access to the maintenance personnel in the rotating part. However, to ensure that the hub gate is opened when the rotor part of the wind turbine is in static condition there must be some locking mechanism which ensures the hub gate locking and unlocking based on the movement of the rotor of the wind turbine.

There are different type of hub gate locking system which prevents the access of the maintenance personnel to the rotating part of the wind turbine generator. However, the systems suffer from various shortcoming such as lack of interoperation of locking mechanism with lock activation mechanism which prevents the existing art in providing fully reliable interlocking system for a hub gate and a rotor lock disc.

There is a need for an efficient interlocking system for a hub gate and a rotor lock disc in a wind turbine generator and which is also efficient to keep the maintenance staff safe.

### Objectives of the Invention:

The primary object of the present invention is to provide an interlocking system for a hub gate and a rotor lock disc in a wind turbine generator.

Another object of the present invention is to provide an interlocking system for a hub gate and a rotor lock disc in a wind turbine generator where the gate of the hub has interoperable connection with the rotor lock system.

### Summary of the Invention:

In an aspect, present invention provides an interlocking system for a hub gate and a rotor lock disc in a wind turbine generator, the system comprising:
a. a rotor lock disc (100) having one or more holes thereon, the rotor lock disc (100) configured to be locked for preventing a rotation thereof by inserting a locking pin (120) in the hole of the rotor lock disc (100);
b. a hub gate (180) provided on a nacelle for providing access to a rotor hub, the hub gate (180) configured to be locked or unlocked by a locking means; and
c. an interlocking means configured to activate the locking means for locking or unlocking of the hub gate (180) when the rotor lock disc is unlocked or locked respectively.

### Detailed description of drawings:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:
Fig. 1: illustrates an interlocking system when hub gate is open, and pin is inside the hole of rotor lock disc.
Fig. 1A and Fig. 1B illustrates a close-up view of components of the interlocking system.
Fig. 2: illustrates an interlocking system when hub gate is closed, and pin is not inside the hole of rotor lock disc.

### Detailed description:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

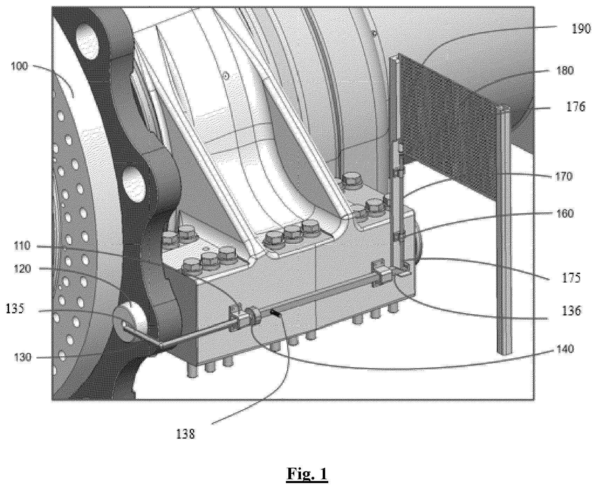

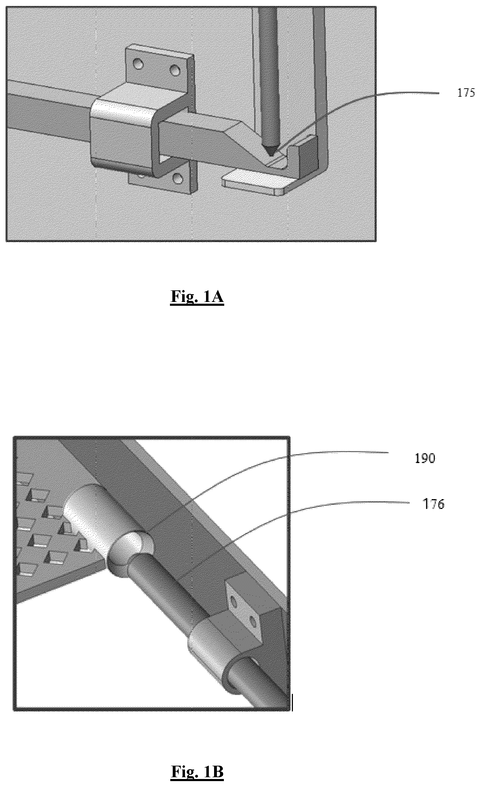

FIG. 1 illustrates an isometric view of a wind turbine generator depicting an embodiment of an interlocking system for a hub gate and a rotor lock disc, of the present invention. The interlocking system for the hub gate and the rotor lock disc in a wind turbine generator includes a rotor lock disc 100 having one or more holes. The rotor lock disc 100 is configured to be locked for preventing a rotation thereof by inserting a locking pin 120 in the hole of the rotor lock disc 100. The mechanism of inserting and removing the locking pin 120 into or out of the hole of the rotor lock disc 100 may be manual or through any other electro mechanical systems well known in the art.

In an embodiment, the hub gate 180 positioned on a nacelle provides access to a rotor hub for the maintenance personnel to enter the hub and carry out maintenance related activities. The hub gate 180 is locked or unlocked by a locking means.

In an embodiment, the system of the present invention includes an interlocking means which is configured to activate the locking means for locking the hub gate 180 when the rotor lock disc 100 is unlocked i.e. when the rotor is rotating. It is typically unsafe for maintenance personnel to access the hub while the rotor is rotating. The locking means is also configured to unlock the hub gate 180 when the rotor lock disc 100 is locked i.e. when the rotor is no longer rotating thus making it safe for the maintenance personnel to enter the hub via the hub gate 180.

In an embodiment, the interlocking means comprises a spring-loaded activation arm 130 having a first end 135 and a tapered second end 136, a spring 140 mounted on the activation arm 130 between the first clamp 110 and a protruded portion of the activation arm 130. The spring 140 is mounted such that it keeps the activation arm 130 in spring tension towards the hub gate 180. The activation arm 130 is preferably L-shaped, however the activation arm effectively works in other shape like curved shape etc. The first end 135 of the activation arm 130 is disposed within the proximity of the rotor lock disc 100 such that when the locking pin 120 is pushed into the hole of the rotor lock disc 100 for locking the rotor lock disc 100 to prevent the rotation of the rotor, the locking pin 120 protrudes out from the hole of the rotor lock disc 100 and makes a contact with the first end 135 of the activation arm 130.

In an embodiment, the locking means comprises a latch rod 170 having a top end 176 and a tapered bottom end 175 as shown in Fig. 1A. For locking the hub gate 180, the top end 176 of the latch rod 170 is configured to be traversed up into a latch cavity 190 on the hub gate 180 as shown in Fig. 1B. For unlocking the hub gate 180, the top end 176 of the latch rod 170 is configured to be traversed down by allowing it to slide out from the latch cavity 190 on the hub gate 180.

In an embodiment, the system of the present invention opens the hub gate 180 when the locking pin 120 is pushed into the hole of the rotor lock disc 100 for locking the rotor lock disc 100. In this rotor locked position, the locking pin 120 protrudes out of the hole in the rotor lock disc 100 and makes a contact with the first end 135 of the activation arm 130. This results in the traversing of the activation arm 130 in the direction of the traversing of the locking pin 120. This in turn further results in the latch rod 170 being pushed downwardly.

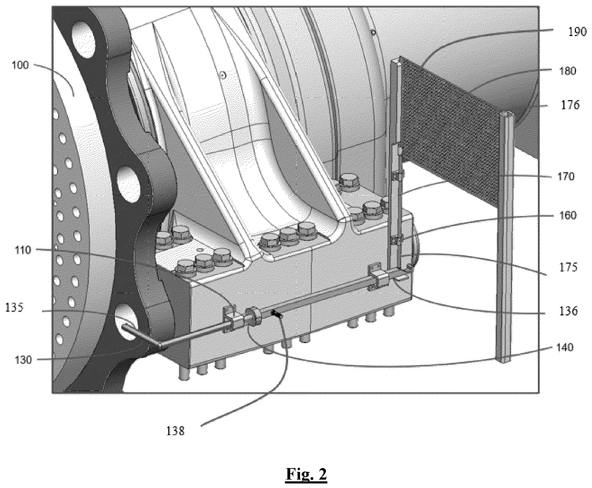

Before the downwardly traversing of the latch rod 170, the tapered second end 175 of the latch rod 170 is supported on the flat portion of the second end 136 of the activation arm 130 during which the hub gate 180 is locked and rotor lock disc 100 is unlocked (as shown in Fig 2). Upon the activation arm 130 traversing in a forward position towards the hub in the direction of the traversing of the locking pin 120, the second end 175 of the latch rod 170 now has room to fall downwardly into a tapered cavity of the second end 175 of the activation arm 130. This allows the traversing down of the top end 176 of the latch rod 170 from the latch cavity 190 of the hub gate 180 thereby unlocking the hub gate 180.

According to an embodiment, a knob 138 is provided on the activation arm 130 for pushing or pulling the activation arm 130 manually to activate the locking means for unlocking or locking of the hub gate 180. This may be done in cases of emergency.

FIG. 2 illustrates the state of the interlocking system of the present invention when rotor lock disc 100 is not locked and the hub gate 180 is locked. As described above in the description of Fig 1, the spring-loaded activation arm 130 comprises the first end_135, the tapered second end 136. A spring 140 is mounted on the activation arm 130 between a clamp 110 and a protruded portion of the activation arm 130. The first end 135 of the activation arm 130 is disposed within the proximity of the rotor lock disc 100 such that when the locking pin 120 is pushed out of the hole of the rotor lock disc 100 for unlocking the rotor lock disc 100 to enable the rotation of the rotor, it results in the locking pin 120 being withdrawn from being in contact with the first end 135 of the activation arm 130. This further results in springing back of the activation arm 130 in the direction of the retraction of the locking pin 120 causing the tapered bottom end 175 of the latch rod 170 to be slid over the flat portion of the second end 136 of the activation arm130 and disposed over it. This finally results in traversing up the top end 176 of the latch rod 170 into the latch cavity 190 of the hub gate 180 thereby locking the hub gate 180.

In an embodiment, the activation arm 130 is held by means of at least one clamp 110. Further, the spring 140 is mounted on the activation arm 130 at clamp 110 for keeping the activation arm in spring tension towards the hub gate 180.

The interlocking system as described in the invention is an effective and cheap yet simple mechanical system not requiring any complicated electrical mechanical components. It can be operated without any power requirement.

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principles of the invention and its practical application to enable one skilled in the art to utilize the invention in various embodiments and with various modifications as are suited to the particular use contemplated.

## Claims

1. An interlocking system for a hub gate and a rotor lock disc in a wind turbine generator, the system comprising:
a. a rotor lock disc (100) having one or more holes thereon, the rotor lock disc (100) configured to be locked for preventing a rotation thereof by inserting a locking pin (120) in the hole of the rotor lock disc (100);
b. a hub gate (180) provided on a nacelle for providing access to a rotor hub, the hub gate (180) configured to be locked or unlocked by a locking means; and
c. an interlocking means configured to activate the locking means for locking or unlocking of the hub gate (180) when the rotor lock disc is unlocked or locked respectively.

2. The interlocking system as claimed in claim 1, wherein the interlocking means comprising:
a spring-loaded activation arm (130) having a first end (135) and a tapered second end (136); wherein the first end being disposed of within the proximity of the rotor lock disc (100) for making contact with the locking pin (120) upon the locking pin (120) pushed into the hole of the rotor lock disc (100).

3. The interlocking system as claimed in claim 1, wherein the locking means comprising a latch rod (170) having a top end (176) and a tapered bottom end (175); wherein
the tapered bottom end (175) of the latch rod (170) and the tapered second end (136) of the activation arm (130) arranged such that upon traversing of the activation arm (130),the top end of the latch rod (170) configured to traverse into or out of a latch cavity (190) on the hub gate (180) for locking or unlocking the hub gate (180) respectively.

4. The interlocking system as claimed in claim 3, wherein
upon the locking pin (120) being pushed into the hole of the rotor lock disc (100) for locking the rotor lock disc (100),
the locking pin (120) making a contact with the first end (135) of the activation arm (130) resulting in the traversing of the activation arm (130) in the direction of the traversing of the locking pin (120) which further resulting in the latch rod (170) disposed over a flat portion of the second end (136) of the activation arm (130) being slid into a tapered cavity of the second end (136) of the activation arm (130) thereby traversing down the top end (176) of the latch rod (170) out of the latch cavity (190) of the hub gate (180) for unlocking the hub gate (180).

5. The interlocking system as claimed in claim 3, wherein
upon the locking pin (120) being retracted out of the hole of the rotor lock disc (100) for unlocking the rotor lock disc (100),
the locking pin (120) being withdrawn from being in contact with the first end (135) of the activation arm (130) resulting in springing back of the activation arm (130) in the direction of the retraction of the locking pin (120) which further resulting in the latch rod (170) disposed within the tapered cavity of the second end (136) of the activation arm (130) being slid over the flat portion of the second end (136) of the activation arum (130) thereby traversing up the top end (175) of the latch rod (170) into the latch cavity (190) of the hub gate (180) for locking the hub gate (180).

6. The interlocking system as claimed in claim 3, wherein the activation arm (130) is held by means of at least one clamp (110).

7. The interlocking system as claimed in claim 3, wherein the spring (140) is mounted on the activation arm (130) at the clamp (110) for keeping the activation arm in spring tension towards the hub gate (180).

8. The interlocking system as claimed in claim 3, wherein the activation arm (130) is L-shaped.
